# EUROPEAN PATENT APPLICATION

(11) **EP 2 174 803 A1**
(43) Date of publication of application: **14.04.2010**
(21) Application number: 08792072.4
(22) Date of filing: 01.08.2008
(51) Int. Cl.: B60C 11/00, B29D 30/60, B60C 9/20, B60C 9/22

(54) **PNEUMATIC TIRE**

(30) Priority: 03.08.2007 JP 2007203466
(71) Applicant: Sumitomo Rubber Industries, Ltd., Kobe-shi, Hyogo 651-0072 (JP)
(72) Inventor: YOSHINAKA, Nobuyoshi, Kobe-shi Hyogo 651-0072 (JP); HANYA, Masahiro, Kobe-shi Hyogo 651-0072 (JP)
(74) Representative: Manitz, Finsterwald & Partner GbR
(86) International application number: PCT/JP2008/063859
(87) International publication number: WO 2009/020066

(57) **Abstract**

A proper balance between ride comfort and steering stability is achieved. A pneumatic tire (1) has a band layer (9) comprising a band ply (9A) where band cords are arranged at an angle of not more than 5 deg. with respect to the circumferential direction of the ti re on the radially outer side of a belt layer (7). The band layer (9) is formed of a crown band pl y (9C) and a shoulder band ply (9S), wherein the crown band ply is arranged in the central portion of the belt layer (7) and composed of low modulus cords (9Y1) and the shoulder band ply is composed of high modulus cords (9Y2) and arranged in both sides thereof. A tread rubber (2G) is formed of a hard crown rubber portion (2C) arranged in the radially outer side of the crown band ply (9C) and a soft shoulder rubber portion (2S) arranged i n the radially outer side of the shoulder band ply (9S).

## Description

### TECHNICAL FIELD

The present invention relates to a pneumatic tire being capable of improving ride comfort and road noise performance without deteriorating steering stability.

### BACKGROUND OF THE INVENTION

In recent years, in a radial tire, a technique is proposed to suppress movement of belt layers (for example, lifting and the like) while high speed running, and thus improving steering stability, by providing a band layer between a belt layer and a tread rubber made by arranging band cords substantially parallel to the circumferential direction of the tire. For example, the following patent document 1 proposes the so-called combination band wherein a band layer comprises a pair of side portions positioned near edges of the belt layer and a center portion positioned between them, and the modulus of band cords disposed in the side potion is larger than the modulus of band cords of the center portion.
Patent document 1: Japanese Unexamined Patent Application Publication No.2005-263137.

### DISCLOSURE OF THE INVENTION

### PROBLEMS TO BE SOLVED BY THE INVENTION

The inventors of the present invention studied further about a pneumatic tire comprising such a combination band. As a result, they found that ride comfort and road noise performance could be improved without deteriorating steering stability by changing the hardness of a tread rubber in a correlation with modulus of a band cord.

That is to say, the present invention is based on disposing soft rubber materials covering both end portions of a belt layer on the radially outer side of the shoulder band plies made of hi gh modulus cords, and on disposing a hard rubber material covering a central portion of the belt layer on the radially outer side of the crown band plies made of low modulus cords. Then, it is an object of the present invention to provide a pneumatic tire, especially a pneumatic tire for a passenger vehicle, being capable of the improving ride comfort and the road noise performance without the deteriorating steering stability.

### MEANS FOR SOLVING THE PROBLEM

The present invention is **characterized in that** a pneumatic tire comprising
a troidal carcass extending from a tread portion to a bead core in each bead portion through each sidewall portion,
a belt layer made of at least two belt plies arranged in the radially outer side of the carcass and on the inner side of the tread and having belt cords arranged at an angle of 15 to 40 deg. with respect to the tire equator,
a band layer made of band plies arranged in the radially outer side of the belt layer and having band cords arranged at an angle of not more than 5 deg. with respect to the circumferential direction of the tire, and
a tread rubber arranged in the radially outer side of the band; wherein the band ply formed by arranging in the width direction of the tire a crown band ply covering the central portion of the belt layer and made of low modulus cords for the band cords, and
a pair of shoulder band plies covering both of the end portions of the belt layer and made of high modulus cords having higher modulus for the band cords than the above-mentioned low modulus cords and the tread rubber comprises
a crown rubber portion made of a hard rubber material and arranged in the radially outer side of the crown band ply, and
shoulder rubber portions made of a rubber material being softer than the crown portion and arranged in the radially outer side of each of the shoulder band ply.

The modulus of the band cords is synonymous with "initial tensile resistance " described in Article 8.8 of "Test methods for chemi cal fibre tire cords", JIS (Japanese Industrial standards) L1017. The test condition of the initial tensile resistance is as follow, and adopting an average of results of ten tests:
Test machine: Material Testing Machine 2005-type, INTESCO co., Ltd. product
Test temperature: 20 deg. C
Test humidity: 65%
A length of test material piece between grip portions: 250 mm
Test Speed: 300 mm/min

The hardness of rubber means durometer A hardness measured with JIS type-A durometer which is found in accordance with the JIS K6253, under an environment of 23 deg. C.

In this specification, the measurements of each part of a tire are determined by a tire mounted on a standard rim (not shown), defined under a standard state unloaded, and inflated to standard pressure unless otherwise noted. The "standard rim" is a design rim which may be a rim officially approved for the tire by a standard organization, namely, "Standard rim" in JATMA, "Design Rim" in TRA, "Measuring Rim" in ETRTO and the like. The standard pressure is a pressure officially approved for the tire, for example, the "maximum air pressure" in JATMA, the "Inflation Pressure" in ETRTO, the maximum pressure given in the "Tire Load Limits at Various Cold Inflation Pressures" table in TRA or the like. In case of passenger car tires, however, 180 kPa is used as the standard pressure.

### EFFECT OF THE INVENTION

In the pneumatic tire of the present invention, the deterioration of steering stability can be prevented by
the shoulder band plies arranged in the radially outer side of both ends of the belt layer and made of difficultly-deformable high modulus cords and
the hard crown rubber portion arranged in the central portion of the tread portion.

The ride comfort and the noise performance can be improved by
the crown band ply arranged in the radially outer side of the central portion of the belt layer and made of deformable low modulus cords, and
the soft shoulder rubber portion arranged in the radially outer side of the above-mentioned shoulder band ply.

Moreover, there is a hard rubber outside the above-mentioned low modulus cord, and there is a soft rubber outside the high modulus cord, respectively. This helps preventing generation of the large difference of rigidity in the width direction of the tread, for example, and thereby improving the steering stability, ride comfort, and noise performance in a proper balance in both of straight running and cornering. Furthermore, the rigidity balance is adjusted in the whole tread potion; and then the tire can move flexibly in response to transformation when the tire is subjected to an external force while improving functions, that is to say, can improve so-called transient property.

### BRIEF DESCRIPTION OF THE DRAWINGS

[Fig. 1] Fig. 1 is a cross sectional view of a pneumatic ti re showing an embodiment of the present invention.
[Fig. 2] Fig. 2 is a development view of the tread portion thereof.
[Fig. 3] Fig. 3 is a partially enlarged view of the tread portion shown in Fig. 1.
[Fig. 4] Fig. 4 is a partially enlarged view of the tread portion of another embodiment of the present invention.
[Fig. 5] Fig. 5 is a cross sectional view explaining a method for manufacturing tread rubber.

### EXPLANATION OF THE REFERENCE

- 1: Pneumatic tire
- 2: Tread portion
- 2G: Tread rubber
- 2c: Crown rubber portion
- 2S: Shoulder rubber portion
- 3: Sidewall portion
- 4: Bead portion
- 5: Bead core
- 6: Carcass
- 7: Belt layer
- 9: Band layer
- 9A: Band ply
- 9C: Crown band ply
- 9s: shoulder band ply
- 9Y1: Low modulus cord
- 9Y2: High modulus cord

### BEST MODE FOR CARRYING OUT THE INVENTION

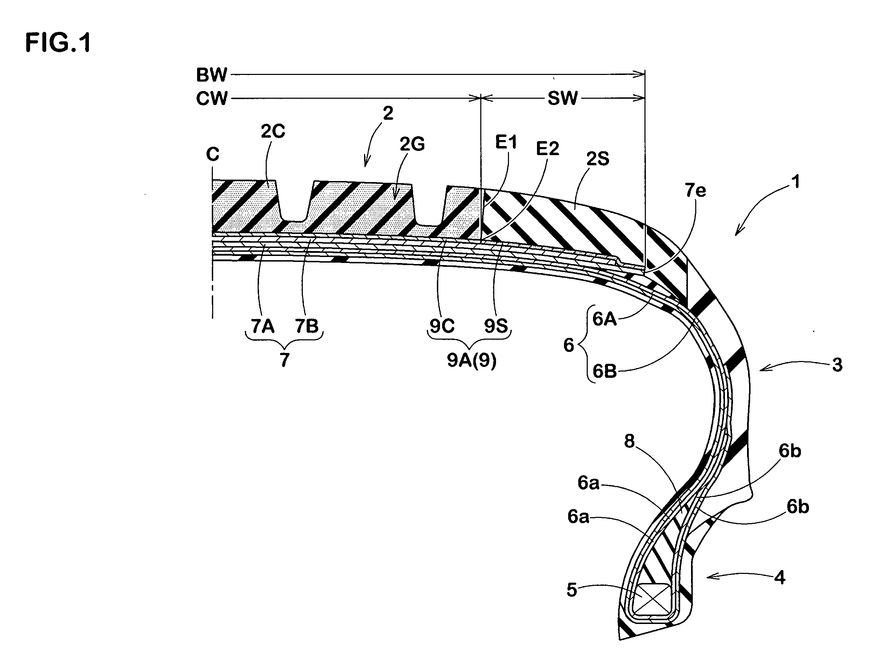

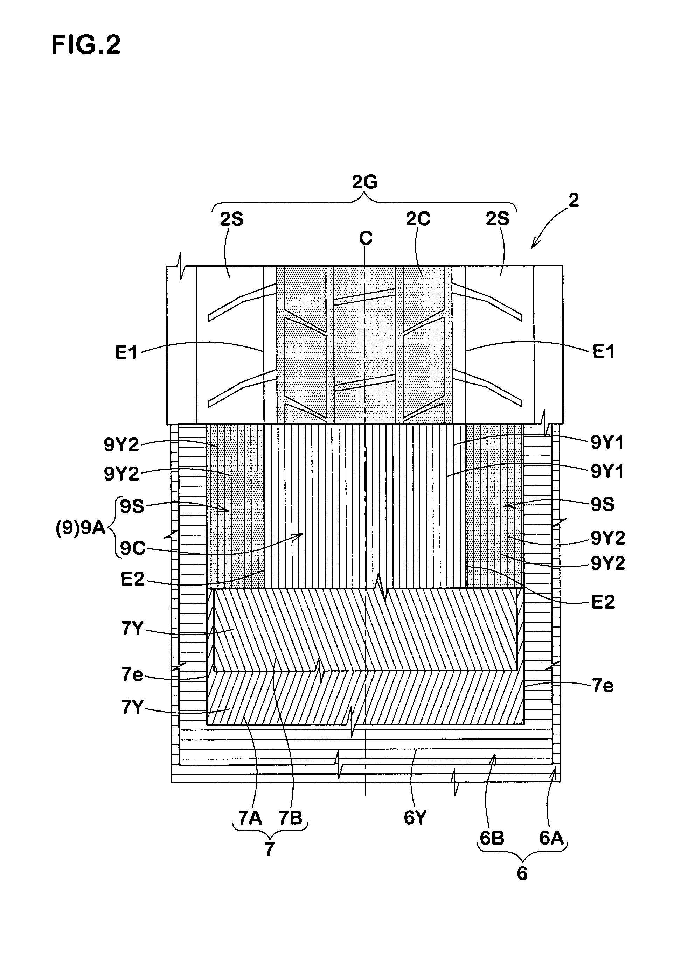

Hereinafter, an embodiment of the present invention will now be described on the basis of drawings. Fig. 1 shows a cross sectional view of the tire meridian section right side including the tire axis at standard inflation of a pneumatic tire of the present embodiment. Fig. 2 is a development view of the tread portion (a partial cross sectional view).

The pneumatic ti re 1 of the present embodiment is a tubel ess tire for a passenger car, and has a toroidal carcass 6 extending from tread portion 2 through a sidewall portion 3 to a bead core 5 in each bead portion 4, a belt layer 7 arranged in the radially outer side of the carcass 6 and inside the tread portion 2, a band layer 9 arranged in the radially outer side of the belt layer 7, and a tread rubber 2G arranged in the radially outer side of the band layer 9.

The above-mentioned carcass 6 comprises of at least one carcass ply, two carcass plies in this example, 6A and 6B. The carcass plies 6A and 6b are made of cord plies covered with thin topping rubber on carcass cords. As shown in Fig. 2, the carcass cords 6Y are arranged at an angle of 60 to 90 deg., for example, with respect to the ti re equator C. Preferable examples of materials of the above-mentioned carcass cords 6Y are organic fibers such as polyester, nylon, rayon, and aramid; however, steel cord may be also used depending on tire category.

Each of the above-mentioned carcass plies 6A and 6B has a toroidal main portion 6a extending from the tread portion 2 through the sidewall portion 3 to the bead core 5 in the bead portion 4, and a turnup portion 6b extending radially outwardly from the above-mentioned main portion 6a and turned up around the bead core 5 from axially inward to axially outward. Between the main portion 6a and the turnup portion 6b, there is a bead apex rubber 8 made of hard rubber and extending radially outwardly from the bead core 5 in a tapered manner.

The above-mentioned belt layer 7 is made of at least two belt plies wherein the belt cords 7Y are arranged at a small angle of 15 to 40 deg., for example, with respect to the tire equator C. The belt layer 7 of the present embodiment is made of two radially inner and outer belt plies 7A and 7B. The cords are overlapped in different orientations so as to intersect the belt cords 7Y each other in each ply. For a material of the belt cords 7Y, steal cord is adopted; however, highly elasticorganic fibers such as aramid, rayon and the like may be also used as needed basis. Meanwhile, the radially inner belt ply 7A is larger in width than the outer belt ply 7B in the present embodiment; therefore, the end of the inner belt ply 7A determines an axial outer end 7e of the belt layer 7 in the present embodiment.

As shown in Figs. 1 and 2, the band layer 9 of the present embodiment comprise of a single band ply 9A. The band ply 9A has the center of wi dth di sposed on the ti re equator C and has substantially the same width BW of the belt layer 7. Then, almost all parts of the belt layer 7 are covered with the band layer 9.

The above-mentioned band ply 9A comprises a crown band ply 9C covering the central portion of the belt layer 7 and a pair of shoulder band plies 9S, 9s arranging in both side of this crown band ply 9c and covering both of the end portions of the belt layer 7. Meanwhile, the plies 9C and 9S are substantially adjacent each other with no space therebetween.

The above-mentioned crown band ply 9C is made of low modulus cords 9Y1 having low modulus arranging at an angle of not more than 5 deg. with respect to the tire circumferential direction. The shoulder band ply 9S is made of high modulus cords 9Y2, which has higher modulus than the low modulus cords 9Y1, arranging at an angle of not more than 5 deg. with respect to the tire circumferential direction.

Generally, the central portion of the tread portion 2 contacts to mostly ground at a great pressure while straight running. Therefore, to cover the central portion of the belt 7 with deformable low modulus cords 9Y1 makes restriction of the central portion of the tread portion 2 weaken and comparatively flexibly deformable. It helps in shock absorption performance in the above-mentioned central portion and in improvement of the ride comfort.

Meanwhile, both end portions of the belt layer 7 are unstable because of occurrence of lifting and the like while high speed running. In the present invention, the both end portions of the belt layer 7 are restricted by the difficultly deformable high moduluscord 9Y2. Therefore, the in-plane deformation of the both end portions of the belt layer 7 may be reduced, thereby improving lateral force greatly while cornering and enhancing the steeri ng stability. Moreover, it may improve hi gh speed running resistance and reduce road noise.

Here, the above-mentioned axial width CW of the crown band ply 9C is preferably not less than 60% of the width BW of belt layer, more preferably not less than 70%, as not limited, to improve the above-mentioned ride comfort. When the axial width CW of the crown band ply 9C i s ext remel y large, the wi dth SW of the shoulder band ply 9S becomes small. Therefore, sufficient improvement of the steering stability and the high-speed resistance may not be expected. Based on this perspective, the upper limit of the width CW of the crown band ply 9C is preferably not more than 90% of the width BW of the belt layer 7, more preferably not more than 80%. Moreover, it is desirable that a width SW of each shoulder band ply 9S is determined by a half of a remaining width obtained by subtracting the width CW of the crown band ply 9C from the width BW of the belt layer 7.

Each of the above-mentioned band plies 9C and 9S is preferably formed by winding the low modulus cords 9Y1 and the high modulus cords 9Y2 spirally in the circumferential direction of the tire. Such a band ply is preferable since it has no joint, thereby improving the tire uniformity and reducing vibration and the like while running. On this occasion, each band cord may be wound one by one, but it is preferable to wind a plural band cords arranged parallel and embedded in topping rubber a belt-like ply that is tape like on the outer side of the belt layer 7.

The modulus (m1) of the low modulus cord 9Y1 is, as not limited, preferably not more than 50 (cN/dtex), more preferably not more than 30 (cN/dtex), since the ride comfort is difficult to be improved when it being too large. When the modulus (m1) of the low modulus cords 9Y1 is extremely small, the steering stability may be significantly reduced; therefore, it is preferably not less than 10 (cN/dtex), more preferably not less than 15 (cN/dtex).

Also the modulus (m2) of the high modulus cord 9Y2, as not limited, the movement of the both end portions of the belt layer 7 cannot be sufficiently reduced when the modulus is too small, it may cause reducing the effects of the steering stability improvement and road noi se reduction. Based on this standpoint, the modulus (m2) is preferably not less than 30 (cN/dtex), more preferably not less than 40 (cN/dtex). When the modulus (m2) of the high modulus cords 9Y2 is extremely large, it may cause deterioration of the ride comfort while running; therefore, it is preferably not more than 100 (cN/dtex), more preferably 90 (cN/dtex).

Moreover, when a ratio (m2/m1) between the modulus (m2) of the high modulus cords 9Y2 and the modulus (m1) of the low modulus cords 9Y1 is extremely small, as not limited, it may cause reducing the effects of the steeri ng stability improvement and the road noi se reduction. Based on this standpoint, the ratio (m2/m1) is preferably not less than 1.5, more preferably not less than 2.0, further more preferably not less than 2.5. When the modulus ratio (m2/m1) is extremely large, there may be a large rigidity gap in a junction E2 between the crown band ply 9C and shoulder band ply 9S, thereby deteriorating tire durability because of concentration of strain at that part. Based on this standpoint, the upper limit of the modulus ratio (m2/m1) is preferably not more than 10.0, more preferably not more than 7.0, much more preferably not more than 6.0, further more preferably not more than 5.0.

For the above-mentioned low modulus cords 9Y1 and high modulus cords 9Y2, organic fiber cords, e.g. nylon, polyester, vinylon, polyethylene naphtalate (PEN), or aramid, for example, may be preferably used in combination arbitrarily. More preferably, for the low modulus cords 9Y1, nylon, polyester, or vinylon may be used. For the high modulus cords 9Y2, polyethylene naphtalate (PEN), or aramid, may be more preferably used. However, needless to say, these combinations are not limited, and composite cord made in combination of the above fibers and the like may be also usable. Meanwhile, the above-mentioned modulus may be adjusted in accordance with changes of not only fiber materials but also twist numbers of filaments.

The band ply 9C of the present embodiment has a substanti all y constant ends (the number of cords per 5 cm ply width) in the low modulus cords 9Y1 and the high modulus cords 9Y2. That is to say, the crown band ply 9c and the shoulder band ply 9S have the same ends of band cords. The ends is not limited, but it is preferably not less than 30, more preferably not less than 40; and preferably not more than 80, more preferably not more than 60.

The above-mentioned tread rubber 2G comprises
the crown rubber portion 2c arranged in the radially outer side of the crown band ply 9C in the radial direction of the tire, and
the shoulder rubber portion 2S arranged in both side of this crown rubber portion 2C and on the radially outer side of each of the shoulder band ply 9S,
wherein they are connected each other in the width direction. Meanwhile, Fig. 1 shows only the right half; however, as shown in Fig. 2, the rubber portion is disposed substantially symmetrically with respect to the tire equator C.

The above mentioned crown rubber potion 2C is made of a hard rubber material. Meanwhile, the above-mentioned shoulder rubber portion 2S is made of a rubber material being softer than the crown rubber portion 2C. That is to say, in the pneumatic tire 1 of the present invention, on the radially outer side of the crown band ply 9C made of the low modulus cords 9Y1 and being comparatively stretchy, there is the crown rubber portion 2c made of the difficulty-deformable and hard rubber material to cope with this. Meanwhile, on the radially outer side of the shoulder band ply 9S in the tire radial direction made of the high modulus cords 9Y2 and being comparatively stretchy-unfavorable, there is the shoulder rubber portion 2S made of the deformable and soft rubber material to cope with this.

In such a pneumatic tire 1, the shoulder band ply 9S made of the high modulus cords 9Y2 inhibits the movement of both end portions of the belt layer 7. And the hard crown rubber portion 2C arranged in the central portion of the tread portion 2 inhibits the deformation of tread rubber in cornering. The synergistic interaction between them reduces tire vibration and thus the road noise, and improves the steering stability. The modulus of the band cord more contributes to the steering stability than the rubber hardness. The soft shoulder rubber portion 2S therefore does not deteriorate the steering stability severely but rather can improve the ri de comfort further. Compared to tires comprising band layers having the same structure, the road noise tends to reduce more in the tire having a softer tread rubber. Furthermore, the crown band ply 9C may exert a high shock-absorbing performance with deforming flexibly the central portion of the tread portion 2, thereby improving further more the ride comfort in straight running. At this time, the hard crown rubber portion 2C prevents the excessive decrease of steering stability. Therefore, the pneumatic tire 1 of the present embodiment can improve the ride comfort and noise performance without deteriorating the steering stability.

Here, the value of the above-mentioned hardness (h1) of the crown rubber portion 2C is not limited, but the rigidity of the crown band ply 9C made of the low modulus cords 9Y1 cannot be compensated, and the steering stability may deteriorate when it is too small. Hence, the hardness (h1) is preferably not less than 55 deg., more preferably not less than 60 deg. While, when the hardness (h1) of the crown rubber portion 2C is too large, the ride comfort and noise performance may deteriorate; therefore, the above-mentioned hardness h1 is preferably not more than 80 deg., more preferably not more than 75 deg.

Also the value of the above-mentioned hardness (h2) of the shoulder rubber portion 2S is not limited, but when it is too large, the shock absorption performance on the central portion of the tread portion 2 may deteriorate, and it may not achieve the ride comfort improvement and the road noise reduction. Therefore, the hardness (h2) is preferably not more than 75 deg., more preferably not more than 70 deg. while, when the hardness (h2) of the shoulder rubber portion 2S is too small, the steering stability may deteriorate severely and the wear resistance may deteriorate. Based on this standpoint, the hardness (h2) of the shoulder rubber portion 2S is preferably not less than 50 deg., more preferably not less than 55 deg.

Moreover, when the difference (h1-h2) between the hardness (h1) of the crown rubber portion 2C and the harness (h2) of the shoulder rubber portion 2S is too small, the above-mentioned effects may not be sufficiently expected. Therefore, the hardness difference (h1-h2) is not less than 2 deg., more preferably not less than 3 deg., much more preferably not less than 4 deg. Meanwhile, when the hardness difference (h1-h2) is too large, there may be a large rigidity gap in a junction E1 thereof, thereby may cause uneven wear and cracks starting from that portion. Based on this standpoint, the hardness difference (h1-h2) is preferably not more than 10 deg., more preferably not more than 9 deg. , much more preferably not more than 8 deg.

The inventors, in their experiments with various sorts of hardness the tread rubber 2G, found that setting the dimensionless value, which is obtained by dividing the above-mentioned hardness difference (h1-h2) by a hardness unit (that is, 1 deg.), to be larger than the modulus ratio (m2/m1) of the above-mentioned band cords makes the above-mentioned effects much more improved. More specifically, they found that the effects, which are caused from combinations of compounding of tread rubber having different hardness and a band structure of band cords having different moduli as mentioned above, are not sufficiently achieved when the dimensionless value of the hardness difference (h1-h2) is smaller than the modulus ratio (m2/m1).

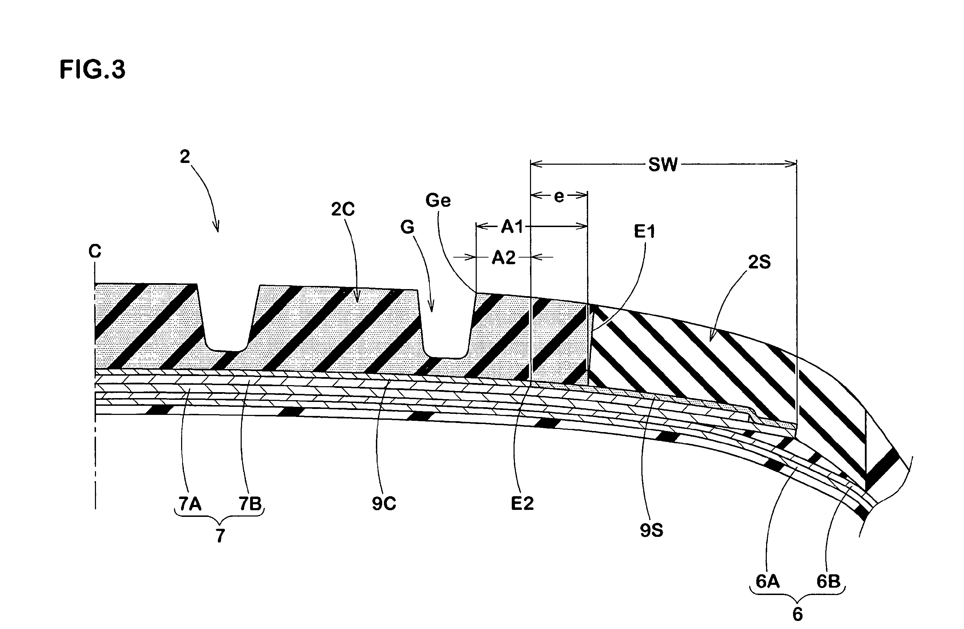

In the present embodiment, the junction E1 between the crown rubber portion 2C and the shoulder rubber portion 2S is arranged in the tire axial direction at substantially the same portion of the junction E2 between the crown band ply 9c and the shoulder band ply 9S. However, as shown in Fig. 3, these junctions E1 and E2 achieve such effects even if they are displaced some in the axial direction of the tire. A displacement quantity (e) between the junction E1 and the junction E2 in the tire axial direction is preferably not more than 50% of the axial width SW of the shoulder band ply 9S, more preferably not more than 30%, much more preferably not more than 10%. The bottom end of the junction E1 of the tread rubber side may be displaced by an axially inner side or outer side with respect to the junction E2 of the band ply side. In the present embodiment, the junction E1 is arranged at not more than 30 deg. with respect to the normal line of tread surface; more over not more than 20 deg.; and not more than 10 deg.

The above mentioned tread portion 2 is provided with a longitudinal groove G extending in the circumferential direction of the tire. The longitudinal groove G becomes comparatively extremely-strained while the tire rolling under load, so that cracks starti ng from the junction E1 may occur when the junction E1 of the tread rubber side is at the position of the longitudinal groove. In the same manner, the bending deformation of the band layer 9 and the like becomes large at an inner portion of groove bottom of the lateral groove G, so that the durability may deteriorate because of concentration of strain at that part when the junction E2 of the band ply side is at this position. Based on this perspective, the junctions E1 and E2 are preferably arranged at positions outside the radially inner zone of the lateral groove G, respectively. More preferably, each of the junctions E1 and E2 is preferably axially spaced apart from the groove edge Ge of each of the above-mentioned longitudinal grooves G by a distance A1 or A2 of at least not less than 5 mm, more preferably not less than 10 mm.

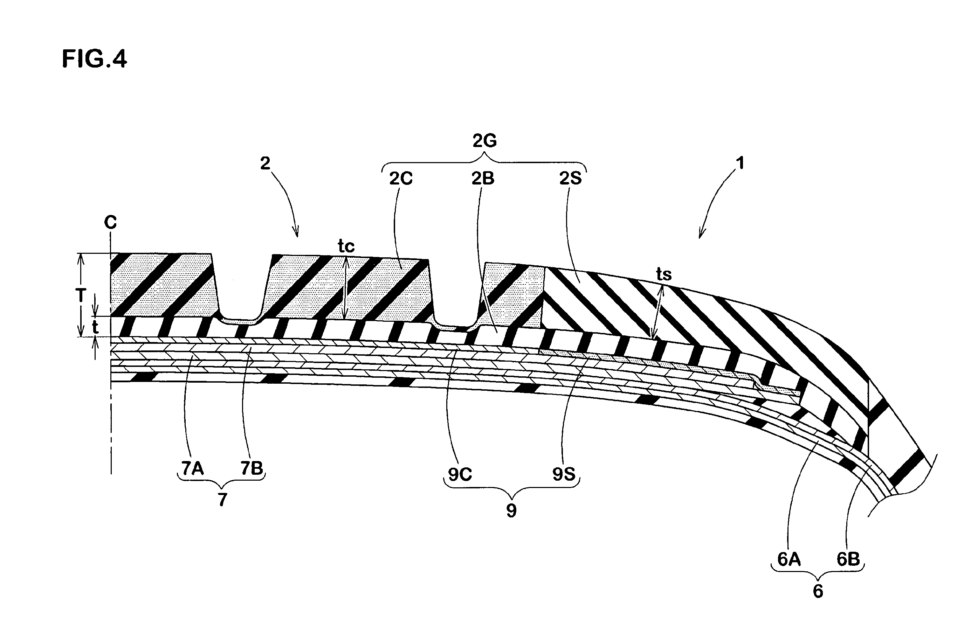

As shown in Fig. 4, the tread rubber 2G may comprise of a number of layers in the tire radial di rection. In the present embodiment, the tread rubber 2G comprises a base rubber portion 2B arranged in the radially outer side of the ti re to cover the whole width of the band layer r 9, a crown rubber portion 2C arranged in the radially outer side and in a crown region, and a pair of shoulder rubber portion 2S arranged in the both side of this crown rubber portion 2C. And, although the left side is not shown in Fig. 3, the rubber arrangement is symmetrically wi th respect to the tire equator C.

The thickness (t) of the above-mentioned base rubber portion 2B extending outside the belt layer 7 is less than 50% of the whole thickness T of the tread rubber 2G. That is to say, a thickness (tc) of the above-mentioned crown rubber portion 2C and a thickness (ts) of the shoulder rubber potion 2S (each of them are measured in a portion except a groove) will be substantially not less than 50% of the whole thickness T of the tread rubber 2G, so as to achieve the effects of the present invention.

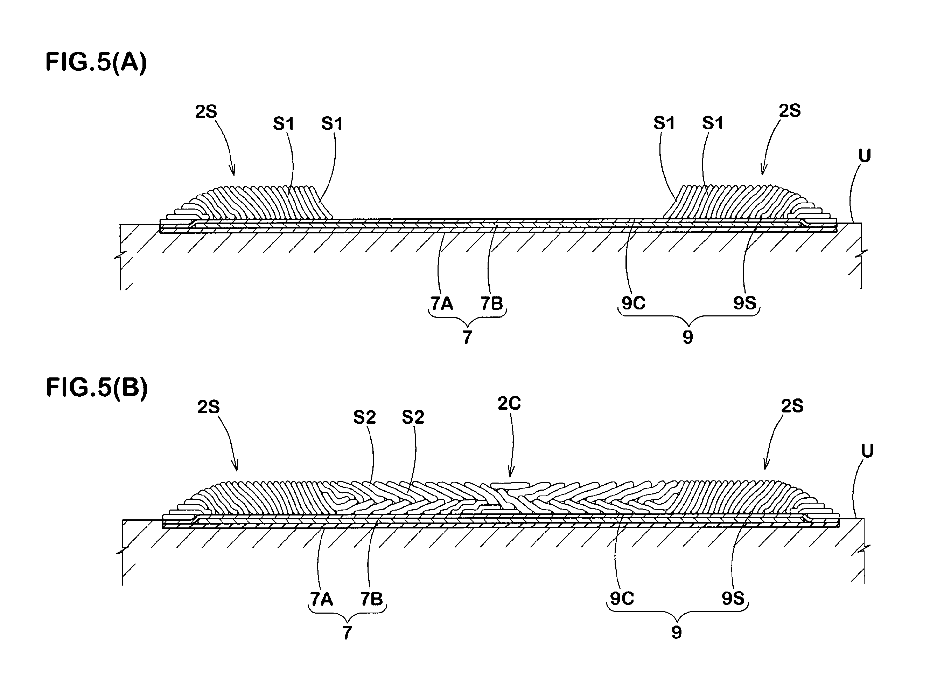

The tread rubber 2G having the above-mentioned crown rubber portion 2C and shoulder rubber portion 2S can be formed of an integrally extruded item made by a rubber extruder. However, as shown in Fig. 5A(A) and (B), it is desirable to form by spirally winding the unvulcanized ribbon-like rubber strips S1 and S2 in the ti re circumferential direction. In this embodiment, the belt layer 7 and the band layer 9 are previously wound outside a cylindrical building drum U, thereby winding the first rubber strip S1 made of the hard rubber on the both end portion, so that the shoulder rubber portions 2S are formed. And, between the shoulder rubber portions 2S and 2S, the crown rubber portion 2C is formed by winding the second rubber strip S2 made of the soft rubber. Such strip laminations body is specifically preferable, so that it has a variable cross sectional shape and can improved productivity.

Although the embodiments of the present invention have been described in detail, the invention is not limited to the above-mentioned concrete embodiment. It will be obvious that various changes of aspects may be made.

### EMBODIMENTS

To ascertain the efficacy of the present invention, a summer tire for passenger car was made by way of test, having a tire size of 22S/50R17 on the basis of the specification shown in Table 1. And the tire was tested for steering stability, ride comfort, and road noise performance.

### <Steering Stability and Ride Comfort>

Under the undermentioned condition, the car was made to run on dry asphalt roads in a tire test course to evaluate steering stability based on handling responsibility, rigid impression, sense of grip, stability while high speed running, and the like through senses of a driver. Using a test car of the same sort, the test driver evaluated ri di ng comfort based on harshness, thrust up, and damping on dry asphalt road surfaces such as bumpy roads, Belgian roads (stone-paved roads) or Bitsman roads (graveled road surface), into ten ranks with using Reference Example 1 being six points as a benchmark, respectively. The larger the value, the better the ride comfort.
Rim: 17x7.5J
Internal pressure: 230 kPa
Test car: 3500cc domesti call y produced passenger FR car (the test ti res were mounted on all the wheels).

### <Road Noise Performance>

While running the above-mentioned test car on bumpy asphalt roads for noise measurement at a speed of 50 km/h, the over all noise level in dB(A) was measured near the driver's right ear position. The results are indicated by increased and decreased values with using Reference Example 1 as a benchmark. The negative index, the better the noise.

And, each of the band cords shown in Table 1 was two fold yarn cords made of twi sted two strands. Primary references are as follows:

### <Nylon>

Material: nylon66
Thickness: 3300 (dtex)
Twist number: 38 (turns /10 cm)

### <PEN-1>

Material: polyethilene-2, 6-naphtalate
Thickness: 2100 (dtex)
Twist number: 15 (turns /10 cm)

### <PEN-2>

Material: polyethilene-2, 6-naphtalate
Thickness: 3300 (dtex)
Twist number: 35 (turns /10 cm)

### <Aramid>

Material: aromatic polyamide
Thickness: 3300 (dtex)
Twist number: 43 (turns /10 cm)

Moreover, the tread rubber was consist primarily of SBR (styrene-butadiene rubber) and was adjusted in hardness by adjusting quantities and the like of carbon and oil.
The test results are shown in Table 1.

### [Table 1]

**Table 1**

| | Ref. Ex. 1 | Ref. Ex. 2 | Ex.1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Hardness (h1) of Crown rubber portion [deg.] | 67 | 64 | 67 | 68 | 70 | 67 | 67 | 67 | 67 | 65 | 67 | 67 |
| Hardness (h2) of Shoulder rubber portion [deg.] | 67 | 64 | 64 | 64 | 67 | 64 | 62 | 64 | 62 | 64 | 64 | 64 |
| Difference (h1-h2) [deg.] | 0 | 0 | 3 | 4 | 3 | 3 | 5 | 3 | 5 | 1 | 3 | 3 |
| Band cord of Crown band ply | nylon | nylon | nylon | nylon | nylon | nylon | nylon | nylon | nylon | nylon | nylon | nylon (fine yarn) |
| Modulus (m1) of Band cord of Crown band ply [cN/dtex] | 17 | 17 | 17 | 17 | 17 | 17 | 17 | 17 | 17 | 17 | 17 | 12 |
| Band cord of Shoulder band ply | PEN-1 | PEN-1 | PEN-1 | PEN-1 | PEN-1 | PEN-2 | PEN-2 | aramid | aramid | PEN-1 | nylon (coarse yarn) | aramid |
| Modulus (m2) of Band cord of Shoulder band ply [cN/dtex] | 42 | 42 | 42 | 42 | 42 | 49 | 49 | 77 | 77 | 42 | 22 | 77 |
| Ratio (m2/m1) | 2.5 | 2.5 | 2.5 | 2.5 | 2.5 | 2.9 | 2.9 | 4.5 | 4.5 | 2.5 | 1.3 | 6.4 |
| Steering stability [score on 10] | 6.0 | 5.0 | 6.0 | 7.0 | 8.0 | 7.0 | 7.0 | 7.5 | 7.5 | 5.5 | 6.0 | 7.5 |
| Ride Comfort [score on 10] | 6.0 | 7.0 | 7.0 | 6.0 | 5.5 | 6.0 | 6.5 | 5.0 | 6.0 | 6.5 | 7.0 | 5.0 |
| Increased or decreased value of Road noise (dB) | benchmark | -1.5 | -1.0 | -0.8 | 0.5 | -1.3 | -1.6 | -1.5 | -2.0 | -1.3 | -0.3 | -1.3 |

As is obvious from Reference Examples 1 and 2 in which a crown rubber portion and a shoulder rubber portion have the same compounding, the steering stability deteriorates when the tread rubber was soft, while the ride comfort and road noise improve. However, as is obvious from comparison between Reference Example 1 and Example 1, when only the shoulder rubber portion was made soft, the ride comfort and noise performance could be improved without deteriorating the steering stability. As shown in Examples 2 and 3, the steering stability might be improved by hardening the crown rubber portion more.

As is obvious from comparison among Examples 1, 4, and 6, and comparison of between Examples 5 and 7, the road noise could be reduced by heightening the modulus of the shoulder band ply.

As stated above, the test results confirmed that the tires according to Examples improve in ride comfort and road noise performance without deteriorating the steering stability.

## Claims

1. A pneumatic tire comprising
a troidal carcass extending from a tread portion to a bead core in each bead portion through each sidewall portion,
a belt layer made of at least two belt plies arranged in the radially outer side of the carcass and on the inner side of the tread portion and having belt cords arranged at an angle of 15 to 40 deg. with respect to the tire equator,
a band layer made of a band ply arranged in the radially outer side of said belt layer and having band cords arranged at an angle of not more than 5 deg. with respect to the circumferential direction of the tire, and
a tread rubber arranged in the radially outer side of said band; wherein
said band ply is formed by arranging in the width direction of the tire
a crown band ply covering the central portion of said belt layer and made of low modulus cords for said band cords, and
a pair of shoulder band plies covering both of the end portions of said belt layer and made of high modulus cords having higher modulus for the band cords than said low modulus cords and
said tread rubber comprises
a crown rubber portion made of a hard rubber material and arranged in the radially outer side of said crown band ply, and
shoulder rubber portions made of a rubber material being softer than the crown portion and arranged in the radially outer side of each of the shoulder band ply.

2. The pneumatic tire according to claim 1, wherein a difference (h1-h2) between a hardness (h1) of said crown rubber portion and a harness (h2) of said shoulder rubber portion is in a range of 2 to 10 deg.

3. The pneumatic tire according to claim 1 or 2, wherein a ratio (m2/m1) between a modulus m2 of said high modulus cord and a modulus (m1) of said low modulus cord is more than 1.0 and not more than 10.

4. The pneumatic tire according to any one of claims 1 to 3, wherein the value of the difference (h1-h2) between the hardness (h1) of the crown rubber portion and the hardness (h2) of the shoulder rubber portion is larger than the ratio (m2/m1) between the modulus m2 of the high modulus cord and the modulus (m1) of the low modulus cord.

5. The pneumatic tire according to any one of claims 1 to 4, wherein said shoulder rubber portion and/or said crown rubber portion is made by using a strip laminated body fo rmed by wi ndi ng spirally unvulcanized ribbon-like rubber strips in the circumferential direction of the tire.
